# EUROPEAN PATENT SPECIFICATION

(11) **EP 1 445 155 B1**
(45) Date of publication and mention of the grant of the patent: **07.06.2006**
(21) Application number: 04001577.8
(22) Date of filing: 26.01.2004
(51) Int. Cl.: B60R 21/01, B60R 22/46

(54) **Seat belt system**
Sicherheitsgurtsystem
Système de ceinture de sécurité

(30) Priority: 04.02.2003 JP 2003027062
(43) Date of publication of application: 11.08.2004
(73) Proprietor: HONDA MOTOR CO., Ltd., Tokyo (JP)
(72) Inventor: Kamiji, Koichi, Wako-shi Saitama (JP)
(74) Representative: Herzog, Markus

(56) References cited:
- EP-A- 1 029 736
- DE-A- 19 961 799
- US-A1- 2001 040 065
- US-B1- 6 213 512
- "ON THE LOOKOUT FOR TROUBLE" , AUTOMOTIVE ENGINEER, MECHANICAL ENGINEERING PUBL.LTD. BURY ST.EDMUNDS, GB, VOL. 25, NR. 11, PAGE(S) 19-20 XP000962112 ISSN: 0307-6490 * column 3, last paragraph - column 4, paragraph 2 *

## Description

### BACKGROUND OF THE INVENTION

The present invention relates to a seat belt system having a pretensioner capable of tightening a seat belt.

There is disclosed as a technique regarding seat belt systems a technique in which a first tension is generated in a seat belt by a pretensioner having an electric motor so as to tighten the seat belt when the occurrence of a.collision of the subj ect vehicle with a vehicle moving in front is estimated, and in the event that a frontal collision of the subject vehicle with the leading vehicle is detected from a deceleration of a vehicle body detected by an acceleration sensor, a larger, second tension is generated in the seat belt by a pyrotechnic pretensioner so as to tighten the seat belt further (for example, refer to JP-B-2946995.

While the seat belt system disclosed in JP-B-2946995 is such as to tighten the seat belt by the pyrotechnic pretensioner when a frontal collision of the vehicle is detected by the acceleration sensor, since the seat belt is also tightened by the pyrotechnic pretensioner also in the event of a rear-end collision where a following vehicle collides with the subject vehicle, there has occurred a problem that a certain amount of repair cost is incurred for replacement of pretensioners when the subject vehicle is repaired after the rear-end collision.

DE 199 61 799 A discloses a seat belt system in accordance with the preamble of claim 1. 'On the lookout for trouble', Automotive Engineer, Mechanical Engineering Publ. Ltd. Bury St. Edmunds, GB, Vol. 25, NR. 11, page(s) 19-20, XP000962112 ISSN: 0307-6490, US 2001/040065 A1 and EP-A-1 029 736 show other seat belt systems without frontal collision estimating section as defined in the preamble of claim 1.

The invention is made in view of the situations, and an object thereof is to provide at low costs a seat belt system for restraining the occupant in the seat in the event of a rear-end collision of the vehicle.

With a view to attaining the object according to the invention, there is provided a seat belt system comprising a seat belt that is worn by an occupant seated in a seat, a reversible pretensioner for forcibly driving the seat belt in a tightening direction so as to restrain the occupant in the seat, a control section for controlling the pretensioner, a rear-end collision detecting section for detecting the occurrence of a rear-end collision of a vehicle and outputting a rear-end collision detection signal in the event of detection of the occurrence of a rear-end collision, wherein the control section causes the pretensioner to drive the seat belt in the tightening direction in the event that the rear-end collision detection signal is outputted from the rear-end collision detecting section, and a collision estimating section for estimating the occurrence of a frontal collision of the vehicle and outputting a frontal collision estimating signal in the event that the occurrence of a frontal collision is estimated, wherein the control section causes the pretensioner to drive the seat belt in the tightening direction in the event that the frontal collision estimating signal is outputted from the collision estimating section, characterized in that the control section causes the pretensioner to wind up the seat belt at high speeds and with a low torque in the event that the frontal collision estimating signal is outputted from the collision estimating section, and in the event that the rear-end collision detection signal is outputted from the rear-end collision detecting section, the control section causes the pretensioner to wind up the seat belt at low speeds and with a high torque.

When the rear-end collision detecting section for detecting the occurrence of a rear-end collision of a vehicle detects the occurrence of a rear-end collision of the vehicle and then outputs a rear-end collision detection signal, the control section causes the pretensioner to forcibly drive the seat belt in the tightening direction so as to restrain the occupant in the seat, whereby the occupant can be restrained in the seat by the seat belt at the time of the rear-end collision, and the repair costs can be reduced by the employment of the reversible (electric) pretensioner.

When the collision estimating section for estimating the occurrence of a frontal collision of the vehicle estimates the occurrence of a frontal collision and outputs a frontal collision estimating signal, the control section causes the pretensioner to forcibly drive the seat belt in the tightening direction, whereby a slack in the seat belt can be removed in advance prior to the occurrence of a frontal collision.

At the time of a frontal collision, that is, in a stage in which a slack in the seat belt is removed in preparation for a collision and in which a collision can still be avoided by a proper operation of the vehicle by the driver, the seat belt is wound up at high speeds and with a lower torque, and as a result of this, a slack in the seat belt can be removed momentarily and the maneuverability of the driver can be ensured for avoidance of a collision. In addition, at the time of a rear-end collision, that is, in a stage in which there occurs a collision and hence the occupant needs to be restrained in the seat in an ensured fashion, the seat belt is wound up at low speeds and with a high torque, and as a result of this, the occupant can be securely restrained in the seat by the seat belt.

### BRIEF DESCRIPTION OF THE DRAWINGS

Fig. 1 is a diagram showing a seat belt system according to an embodiment of the invention and its related configuration.
Fig.2 is a diagram showing an example of timings of respective operations and generated decelerations in the seat belt system according to the invention.

### DETAILED DESCRIPTION OF THE PREFERRED EMBODIMENTS

A seat belt system according to an embodiment of the invention will be described below by reference to the accompanying drawings.

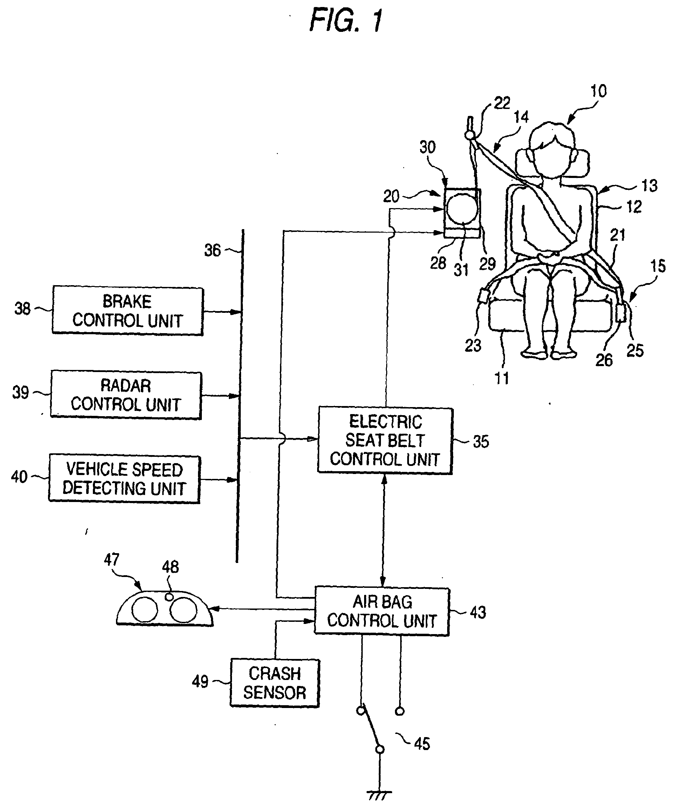

As shown in Fig. 1, a seat belt system 15 according to the embodiment of the invention has a seat belt 14 that is worn by an occupant 10 who is seated in a seat 13 comprising a seat cushion 11 for supporting mainly the hip portion of the occupant 10 and a seat back 12 for supporting mainly the back of the occupant 10, whereby the occupant 10 is restrained in the seat 13 by this seat belt 14. The seat belt system 15 according to the embodiment is of a so-called three-point type.

In the seat belt system 15, a webbing 21 of the seat belt 14 extends upwardly from a retractor 20 provided in a center pillar, not shown, which is situated outboard of the seat 13 and is then passed through a through-anchorage 22 supported at an upper portion of the center pillar, and a distal end of the webbing 21 is attached to a floor of a vehicle body via an outer anchorage which is also situated outboard of the seat 13. The seat belt 14 has a tongue plate 25 through which a part of the webbing 21 which is situated between the through-anchorage 22 and the outer anchorage 23 is passed through, and this tongue plate 25 is detachably inserted into a buckle 26 attached to the floor of the vehicle body on an inboard side of the seat 13.

Then, when the occupant 10 seated in the seat 13 pulls on the tongue plate 25, the seat belt 14 is pulled out of the retractor 20, and when the tongue plate 25 is inserted into the buckle 26, part of the body of the occupant 10 which is situated mainly from the shoulder to the chest thereof is retrained by a portion of the seat belt 14 which is situated from the through-anchorage 22 to the tongue plate 25 on an opposite side to the seat 13, and part of the body of the occupant 10 which is situated mainly at the abdomen thereof is restrained by a portion of the seat belt 14 which is situated from the tongue plate 25 to the outer anchorage 23 on the opposite side to the seat 13.

There is provided in the retractor 20 a known irreversible primary pretensioner 28 of a pyrotechnic type for momentarily retracting and tightening the seat belt 14 with an explosive force using gunpowder or of a spring type.

In addition, there is provided in the retractor 20 a reversible secondary pretensioner (a pretensioner) 30 for retracting and tightening the seat belt 14 by virtue of the driving force of an electric motor 29. Namely, the secondary pretensioner 30 is constructed such that the seat belt 14 is forcibly wound up to be retracted in a tightening direction by driving a reel 31 for winding up the webbing 21 by the electric motor 29 within the retractor 20, whereas the seat belt 14 is allowed to be drawn out of the retractor 20 when the tightening of the seat belt 14 is released by bringing the reel 31 into a state in which the reel 31 is allowed to implement winding-up operation using a spring by releasing the mechanical meshing engagement between the reel 31 and the electric motor 29 so as to allow the reel 31 to spin. Since the construction of the retractor 20 is known, no drawing of the retractor 20 is provided. By using the electric motor 29 which can rotate forward and backward, the seat belt 14 can be tightened by allowing the electric motor 29 to rotate forward, whereas the tightening of the seat belt 14 can be released by allowing the electric motor 29 to rotate backward.

Then, an electric seat belt control unit 35 which is a control unit for controlling the driving of the electric motor 29 is connected to the secondarypretensioner 30. This electric seat belt control unit 35 is such as to control the electric motor 29 such that the occupant 10 can be restrained by removing a slack in the seat belt 14 in advance by winding up the seat belt 14 by the reel 31 using the driving force of the electric motor 29 within the retractor 20 in the event that the occurrence of a collision of the vehicle with an object in front thereof is estimated, whereas, in the event that the possibility of the occurrence of such a collision is denied, the mechanical meshing engagement between the reel 31 and the electric motor 29 within the retractor is cancelled, and the electric seat belt control unit 35 is connected to an in-vehicle LAN connecting bus 36. In addition, when the electric seat belt control unit 35 outputs an actuation signal, the secondary pretensioner 30 drives the seat belt 14 in the tightening direction in cooperation with the electric motor 29.

Connected to the connecting bus 36 are a brake control unit 38 for generating a signal indicating a possibility of the occurrence of a collision when the brakes are applied, a radar control unit 39 for generating a moving object signal indicating a possibility of the occurrence of a collision with a moving object such as a vehicle and a stationary object signal indicating a possibility of the occurrence of a collision with a stationary object such as an obstacle, and a vehicle speed detecting unit 40 for detecting a vehicle speed.

An air bag control unit 43 for controlling a seat belt auxiliary restraint system including an air bag is connected to the electric seat belt control unit 35.

The brake control unit 38 sends to the electric seat belt control unit 35 a BA signal which is a frontal collision estimating signal which indicates a possibility of the occurrence of a frontal collision when a brake pedal depressing speed exceeds a threshold corresponding to a current vehicle speed. Note that the BA signal maybe generated when a dangerous operation of the vehicle such as an abrupt operation of a steering wheel of the vehicle is detected which results from operations relating to the driving of the subject vehicle. In addition to this, the BA signal may also be generated when a dangerous vehicle condition of the subject vehicle is detected such as when a slippage is detected which has resulted from a difference in wheel speed between left and right wheels.

The radar control unit 39 detects the existence of an object in front thereof by radar and estimates a possibility of the occurrence of a collision of vehicles based on a detection signal from the radar in the event that a relationship (distance, relative speed or the like) between the object in front and the subject vehicle satisfies a predetermined condition and estimates no possibility of the occurrence of a collision of vehicles in the event that the relationship between the object in front and the subject vehicle does not satisfy the condition.

Furthermore, the radar control unit 39 judges whether the object in front which is detected by radar is a stationary one or a moving one from a difference in relative speed between the object in front and the subject vehicle. Namely, the radar control unit 39 estimates not only the occurrence of a collision with a stationary object situated in front in a traveling direction of the subject vehicle but also the occurrence of a collision with a moving object traveling in front in the traveling direction of the subject vehicle.

Then, in the event that the object with which the subject vehicle is estimated to possibly collide is determined to be a stationary object, the radar control unit 39 outputs to the electric seat belt control unit 35 a stationary object signal which is a frontal collision estimating.signal indicating the existence of a situation where a collision with the stationary object is estimated. On the other hand, in the event that.the object with which the subject vehicle is estimated to possibly collide is determined to be a moving object, the radar control unit 39 outputs to the electric seat belt control unit 35 a moving object signal which is a frontal collision estimating signal indicating the existence of a situation where a collision with the moving object is estimated.

Thevehicle speeddetectingunit 40 outputs to the electric seat belt control unit 35 a vehicle speed signal from a vehicle speed sensor.

Connected to the air bag control unit 43 for controlling the air bag is a buckle switch 45 for detecting whether or not the tongue plate 25 of the seat belt 14 of the seat belt system 15 is in engagement with the buckle 26, in other words, whether or not the seat belt 14 is worn by the occupant 10. Furthermore, connected to the air bag control unit 43 is a warning lamp 48 provided in an instrument cluster or an instruments display unit 47 in an instrument panel. In addition, a.crash sensor 49 for detecting a collision of the vehicle is connected to the air bag control unit 43.

Here, the crash sensor 49 is constructed so as to detect both a frontal collision and a rear-end collision of the vehicle from deceleration and acceleration of the vehicle body, and the crash sensor 49 outputs to the air bag control unit 43 a frontal collision detection signal in the event that the crash sensor 49 detects a frontal collision by detecting a predetermined deceleration of the vehicle body and outputs to the air bag control unit 43 a rear-end collision detection signal in the event that the crash sensor 49 detects a rear-end collision by detecting a predetermined acceleration of the vehicle body. Note that these frontal collision detection signal and rear-end collision detection signal are also outputted to the electric seat belt control unit 35 via the air bag control unit 43.

A buckle signal that is outputted from the buckle switch 45 is outputted to the electric seat belt control unit 35 via the air bag control unit 43. Note that the electric seat belt control unit 35 informs the occupant of the occurrence of a failure by illuminating the warning lamp 48 via the air bag control unit 43 in case the failure occurs in the seat belt system 15.

Then, in the event that any of the BAsignal, the stationary object signal and the moving object signal is outputted which are the frontal collision estimating signal designed to be outputted from the brake control unit 38 and the radar control unit 39 which are adapted to estimate the occurrence of a frontal collision of the vehicle when the occurrence of a frontal collision is estimated, the electric seat belt control unit 35 of the seat belt system 15 outputs an actuation signal and implements a tightening operation in which the seat belt 14 is driven in the tightening direction by the electric motor 29 of.the secondary pretensioner 30.

The electric seat belt control unit 35 outputs the actuation signal to the secondary pretensioner 30 at an earliest determination point among a determination point of the occurrence of an estimated collision with a stationary object in which the occurrence of an estimated collision with a stationary object situated in front in the traveling direction is determined by the radar control unit 39 (that is, a point where the stationary object signal is generate), a determination point of the occurrence of an estimated collision with a moving object in which the occurrence of an estimated collision with a moving object traveling in front in the traveling direction is determined by the radar control unit 39 (that is, a point where the moving object signal is generated) and a determination point of the occurrence of an estimated collision estimated from application of the brakes in which the occurrence of an estimated collision is determined by the brake control unit 38 based on the operating speed of the brake pedal (that is a point where the BA signal is generated).

In addition, the electric seat belt control unit 35 of the seat belt system 15 according to the embodiment outputs the actuation signal in the event that the crash sensor 49 detects a rear-end collision of the vehicle and then outputs a rear-end collision signal and similarly implements a tightening operation in which the seat belt 14 is driven in the.tightening direction by the electric motor 29 of the secondary pretensioner 30.

Here, when implementing the tightening operation in which the seat belt 14 is driven in the tightening direction by the electric motor 29 of the secondary pretensioner 30 based on the output of any of the BA signal, the stationary object signal and the moving object signal which are the frontal collision estimating signal, the electric seat belt control unit 35 causes the electric motor 29 to wind up the seat belt 14 at high speeds and with a low torque so that a slack in the seat belt 14 can be removed momentarily. On the other hand, when implementing the tightening operation in which the seat belt 14 is driven in the tightening direction by the electric motor 29 of the secondary pretensioner 30 based on the output of a rear-end collision signal, the electric seat belt control unit 35 causes the electric motor 29 to wind up the seat belt 14 at a speed lower than the aforesaid high speeds and with a torque higher than the aforesaid low torque so that the occupant 10 can be securely restrained in the seat 13 through the tightening of the seat belt 14 by the electric motor 29.

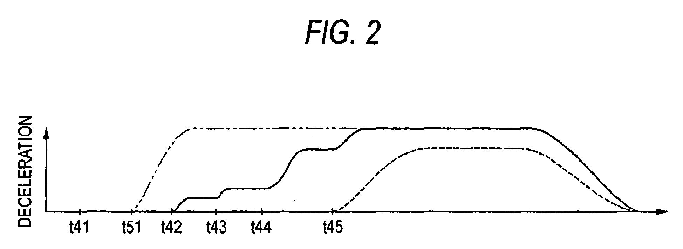

Referring to Fig. 2, an example of timings of the respective operations or events of the seat belt system 15 according to the embodiment will be described below sequentially in terms of time in association with a condition where deceleration is generated.

When detecting.an object (for example, a leading vehicle) in front by radar, for example, and determining that a distance from the object in front decreases so as to fall within a predetermined value, the radar control unit 39 starts an automatic brake control (t41 in Fig. 2) and outputs a stationary object signal in the event that the object in front is a stationary object and a moving object signal in the event that the object in front is a moving object. In its initial stage (t41 to t42 in Fig. 2), the radar control unit 39 activates a voice outputting device in order to give the occupant an audible warning that the distance from the leading object has decreased.

The electric seat belt control unit 35, which is receiving either of the stationary object signal and the moving object signal from the radar control unit 39 in the state where the occurrence of a collision with the object in front of the subject vehicle is estimated, outputs an actuation signal and implements a tightening operation in which the seat belt 14 is wound up by the electric motor 29 of the secondary pretensioner 30 for a predetermined winding-up time so as to tighten the seat belt 14 and thereafter the seat belt 14 is fixed in a stopped condition (in other words, the drawing of the seat belt 14 is disabled) for at least a predetermined fixing time, whereby the occupant 10 is restrained in the seat 13 by the seat belt 14, when the electric seat belt control unit 35 determines based on either of the stationary object signal and the moving object signal that the electric seat belt control unit 35 is receiving that a predetermined length of time (for example, 2 seconds) has elapsed since the input of the relevant signal is started with an input condition being maintained (t44 in Fig. 2). As this occurs, a slack in the seat belt 14 can be removed momentarily through a PWM control of the electric motor 29, and moreover, the seat belt 14 can be wound up at high speeds and with a low torque in such a manner that the operations for driving the vehicle by the occupant 10 is not disturbed.

In addition, when the crash sensor 49 detects a frontal collision of the vehicle and outputs a frontal collision detection signal, the air bag control unit 43 inflates the air bag and causes the pyrotechnic- or spring-type primary pretensioner 28 to retract and tighten the seat belt 14 momentarily with a higher tension than that mentioned previously.

In addition, when the crash sensor 49 detects a rear-end collision of the vehicle and outputs a rear-end collision signal, the rear-end collision signal so outputted is then outputted to the electric seat belt control unit 35 via the air bag control unit 43. When the rear-end collision signal enters the electric seat belt control unit 35, the electric seat belt control unit 35 outputs an actuation signal and implements a tightening operation in which the seat belt 14 is wound up by the electric motor 29 of the secondary pretensioner 30 for a predetermined winding-up time so as to tighten the seat belt 14 and thereafter the seat belt 14 is fixed in a stopped condition (in other words, the drawing of the seat belt 14 is disabled) for at least a predetermined fixing time, whereby the occupant 10 is restrained in the seat 13 by the seat belt 14. As this occurs, the seat belt 14 can be wound up with a high tension, and at low speeds and with a high torque so that the occupant 10 can be restrained in the seat 13 in an ensured fashion.

The following advantages can be provided by the seat belt system 15 according to the embodiment that is described heretofore.

When either of the brake control unit 38 and the radar control unit 39 which estimate the occurrence of a frontal collision of the vehicle estimates the occurrence of a frontal collision and outputs any of the BA signal, the stationary obj ect signal and the moving object signal which are the frontal collision estimating signal, the electric seat belt control unit 35 outputs an actuation signal to the secondarypretensioner 30, and as a result of this, the secondary pretensioner 30 forcibly drives the seat belt 14 in the tightening direction, whereby a slack in the seat belt 14 can be removed in advance prior to a frontal collision. In addition, when the crash sensor 49 for detecting the occurrence of a rear-end collision of the vehicle detects the occurrence of a rear-end collision and outputs a rear-end collision detection signal, the electric seat belt control unit 35 outputs an actuation signal to the secondarypretensioner 30, and as a result of this, the secondary pretensioner 30 forcibly drives the seat belt 14 in the tightening direction, whereby the occupant 10 can be restrained in the seat 13 by the seat belt 14 at the time of a rear-end collision. Consequently, the occupant 10 can be restrained in the seat 13 at the time of the rear-end collision as well. Moreover, since the reversible secondary pretensioner 30 is used, the repair costs can be reduced.

Here, at the time of the rear-end collision of the vehicle, the occupant is first made to bend backward due to a large acceleration generated in the vehicle body temporarily, and thereafter the occupant is then made to move forward as the acceleration so generated in the vehicle body decreases, and when made to move forward, the occupant 10 is restrained in the seat 13 by the seat belt 14. Thus, there still exists enough time for the occupant 10 to be restrained in the seat 13 in a proper fashion even under the condition where the crash sensor 49 detects the rear-end collision and the secondarypretensioner 30 drives the seat belt 14 in the tightening direction using the driving force of the electric motor 29. Consequently, by using the reversible secondary pretensioner 30 for driving the seat belt 14 in the tightening direction in advance using the driving force of the electric motor 29 when the occurrence of a frontal collision of the vehicle is estimated, the seat belt 14 can be tightened properly also at the time of the rear-end collision, and since the crash sensor 49 can detect a rear-end collision, the necessity of detecting a rear-end collision by radar is obviated, thereby making it possible to reduce the production costs.

Furthermore, at the time of the frontal collision, that is, in the stage in which a slack in the seat belt is removed in preparation for a collision and in which a collision can still be avoided by a proper operation of the vehicle by the driver, the seat belt is wound up at high speeds and with a lower torque, and as a result of this, a slack in the seat belt can be removed momentarily and the maneuverability of the driver can be ensured for avoidance of a collision.

Note that while, the embodiment is described based on the example where both the pyrotechnic- or spring-type primary pretensioner 28 and the secondary pretensioner 30 comprising the electric motor 29 are provided on the retractor 20 side, the pyrotechnic-type primary pretensioner 28 may be provided on the retractor 20 side, whereas the secondary pretensioner 30 may be provided on the buckle 26 side. In this case, the secondary pretensioner 30 tightens the seat belt by rectracting the buckle 26 by the electric motor 29. Furthermore, the positional relationship between the primary pretensioner 28 and the secondary pretensioner 30 may be reversed.

In addition, the seat belt system 15 according to the embodiment may be provided on the other seats for the occupants of the vehicle other than the seat for the driver.

As is described heretofore, according to the first aspect of the invention, when the rear-end collision detecting section for detecting the occurrence of a rear-end collision of a vehicle detects the occurrence of a rear-end collision of the vehicle and then outputs a rear-end collision detection signal, the control section causes the pretensioner to forcibly drive the seat belt in the tightening direction so as to restrain the occupant in the seat, whereby the occupant can be restrained in the seat by the seat belt at the time of the rear-end collision. Consequetly, the occupant can be restrained in the seat at the time or the rear-end collision as well, and moreover, since the reversible pretensioner is used, the repair costs can be reduced.

According to the second aspect of the invention, when the collision estimating section for estimating the occurrence of a frontal collision of the vehicle estimates the occurrence of a frontal collision and outputs a frontal collision estimating signal, the control section causes the pretensioner to forcibly drive the seat belt in the tightening direction, whereby a slack in the seat belt can be removed in advance prior to the occurrence of a frontal collision.

According to the third aspect of the invention, at the time of a frontal collision, that is, in a stage in which a slack in the seat belt is removed in preparation for a collision and in which a collision can still be avoided by a proper operation of the vehicle by the driver, the seat belt is wound up at high speeds and with a low torque, and as a result of this, a slack in the seat belt can be removed momentarily and the maneuverability of the driver can be ensured for avoidance of a collision. In addition, at the time of a rear-end collision, that is, in a stage in which there occurs a collision and hence the occupant needs to be restrained in the seat in an ensured fashion, the seat belt is wound up at low speeds and with a high torque, and as a result of this, the occupant can be securely restrained in the seat by the seat belt.

A seat belt system having a reversible pretensioner 30 for forcibly driving a seat belt 14 in a tightening direction so as to restrain an occupant in a seat 13, a control section for controlling the pretensioner, and a rear-end collision detecting section 49 for detecting the occurrence of a rear-end collision of a vehicle and outputting a rear-end collision detection signal in the event of detection of the occurrence of a rear-end collision, wherein the control section causes the pretensioner 30 to drive the seat belt 14 in the tightening direction in the event that a rear-end collision detection signal is outputted from the rear-end collision detecting section.

## Claims

1. A seat belt system comprising:
a seat belt (14) that is worn by an occupant (10) seated in a seat (13),
a reversible pretensioner (30) for forcibly driving the seat belt (14) in a tightening direction so as to restrain the occupant (10) in the seat (13),
a control section (35) for controlling the pretensioner (30),
a rear-end collision detecting section (49) for detecting the occurrence of a rear-end collision of a vehicle and outputting a rear-end collision detection signal in the event of detection of the occurrence of a rear-end collision, wherein
the control section (35) causes the pretensioner (30) to drive the seat belt (14) in the tightening direction in the event that the rear-end collision detection signal is outputted from the rear-end collision detecting section (49), and
a collision estimating section (38, 39) for estimating the occurrence of a frontal collision of the vehicle and outputting a frontal collision estimating signal in the event that the occurrence of a frontal collision is estimated, wherein
the control section (35) causes the pretensioner (30) to drive the seat belt (14) in the tightening direction in the event that the frontal collision estimating signal is outputted from the collision estimating section (38, 39),
**characterized in that**
the control section (35) causes the pretensioner (30) to wind up the seat belt(14) at high speeds and with a low torque in the event that the frontal collision estimating signal is outputted from the collision estimating section (38, 39), and
in the event that the rear-end collision detection signal is outputted from the rear-end collision detecting section (49), the control section (35) causes the pretensioner (30) to wind up the seat belt (14) at low speeds and with a high torque.

## Patentansprüche

1. Sicherheitsgurtsystem, umfassend:
einen Sicherheitsgurt (14), der von einem in einem Sitz (13) sitzenden Insassen (10) getragen wird,
einen reversiblen Vorspanner (30) zum zwangsweisen Antreiben des Sicherheitsgurts (14) in Dichtziehrichtung, um den Insassen (10) in dem Sitz (13) zurückzuhalten,
einen Steuerabschnitt (35) zum Steuern/Regeln des Vorspanners (30),
einen Heckkollisionserfassungsabschnitt (49) zum Erfassen des Auftretens einer Heckkollision eines Fahrzeugs und zum Ausgeben eines Heckkollisionerfassungssignals für den Fall der Erfassung des Auftretens einer Heckkollision, worin
der Steuerabschnitt (35) bewirkt, dass der Vorspanner (30) den Sicherheitsgurt (14) in der Dichtziehrichtung antreibt, für den Fall, dass das Heckkollisionerfassungssignal von dem Heckkollisionserfassungsabschnitt (49) ausgegeben wird, und
einen Kollisionsschätzabschnitt (38, 39) zum Schätzen des Auftretens einer Frontalkollision des Fahrzeugs und zum Ausgeben eines Frontalkollisionschätzsignals für den Fall, dass das Auftreten einer Frontalkollision geschätzt wird, worin
der Steuerabschnitt (35) bewirkt, dass der Vorspanner (30) den Sicherheitsgurt (14) in der Dichtziehrichtung antreibt, für den Fall, dass das Frontalkollisionschätzsignal von dem Kollisionsschätzabschnitt (38, 39) ausgegeben wird,
**dadurch gekennzeichnet,**
**dass** der Steuerabschnitt (35) bewirkt, dass der Vorspanner (30) den Sicherheitsgurt (14) mit hohen Geschwindigkeiten und mit geringem Drehmoment aufwickelt, für den Fall, dass das Frontalkollisionschätzsignal von dem Kollisionsschätzabschnitt (38, 39) ausgegeben wird, und
für den Fall, dass das Heckkollisionerfassungssignal von dem Heckkollisionserfassungsabschnitt (49) ausgegeben wird, der Steuerabschnitt (35) bewirkt, dass der Vorspanner (30) den Sicherheitsgurt (14) mit geringen Geschwindigkeiten und mit hohem Drehmoment aufwickelt.

## Revendications

1. Système de ceinture de sécurité comprenant :
une ceinture de sécurité (14) qui est portée par un occupant (10) assis dans un siège (13),
un prétendeur réversible (30) destiné à entraîner de force la ceinture de sécurité (14) dans une direction de serrage afin de retenir l'occupant (10) dans le siège (13),
une section de commande (35) destinée à commander le prétendeur (30),
une section de détection de collision par l'arrière (49) destinée à détecter la survenue d'une collision par l'arrière d'un véhicule et sortir un signal de détection de collision par l'arrière dans le cas où la survenue d'une collision par l'arrière est détectée, où
la section de commande (35) oblige le prétendeur (30) à entraîner la ceinture de sécurité (14) dans la direction de serrage dans le cas où le signal de détection de collision par l'arrière est sorti par la section de détection de collision par l'arrière (49), et
une section d'estimation de collision (38, 39) destinée à estimer la survenue d'une collision frontale du véhicule et sortir un signal d'estimation de collision frontale dans le cas où la survenue d'une collision frontale est estimée, où
la section de commande (35) oblige le prétendeur (30) à entraîner la ceinture de sécurité (14) dans la direction de serrage dans le cas où le signal d'estimation de collision frontale est sorti par la section d'estimation de collision (38, 39),
**caractérisé en ce que**
la section de commande (35) oblige le prétendeur (30) à enrouler la ceinture de sécurité (14) à de grandes vitesses et avec un faible couple dans le cas où le signal d'estimation de collision frontale est sorti par la section d'estimation de collision (38, 39), et
dans le cas où le signal de détection de collision par l'arrière est sorti par la section de détection de collision par l'arrière (49), la section de commande (35) oblige le prétendeur (30) à enrouler la ceinture de sécurité (14) à de grandes vitesses et avec un couple élevé.
